Europäisches Patentamt

**European Patent Office**

**Office européen des brevets**

(11) Numéro de publication: **0 113 300**
**A1**

## (12) DEMANDE DE BREVET EUROPEEN

(21) Numéro de dépôt: 83420186.5

(22) Date de dépôt: 09.12.83

(51) Int. Cl.³: **F 16 B 12/04**
**A 47 B 96/20**

(30) Priorité: 03.01.83 FR 8300162

(43) Date de publication de la demande:
11.07.84 Bulletin 84/28

(84) Etats contractants désignés:
AT BE CH DE FR GB IT LI NL SE

(71) Demandeur: ALLIBERT S.A. Société Anonyme Française
129, avenue Léon Blum
F-38100 Grenoble(FR)

(72) Inventeur: Leray, Didier
4 Boulevard René Payot
F-38500 Voiron Isère(FR)

(74) Mandataire: Maureau, Bernard
Cabinet GERMAIN & MAUREAU Le Britannia - Tour C 20,
Boulevard Eugène Déruelle
F-69003 Lyon(FR)

(54) **Moyen de liaison entre deux panneaux adjacents.**

(57) Ce moyen de liaison entre deux panneaux adjacents est constitué par un film (5) de matière plastique qui prolonge par sa face extérieure celle des deux panneaux à lier et qui vient de moulage avec les chants de ces panneaux.

Ce film (5) comporte, sur sa face intérieure comprise entre les chants (3, 4) des panneaux (1, 2), une pluralité de rainures longitudinales parallèles (6) dont les dimensions sont telles que le volume de matière plastique décroît depuis les chants jusqu'à la zone longitudinale médiane.

FIG.2

EP 0 113 300 A1

1

# MOYEN DE LIAISON ENTRE DEUX PANNEAUX ADJACENTS

L'invention a pour objet un moyen permettant de lier entre eux deux panneaux adjacents susceptibles d'occuper deux positions : la première dans le prolongement l'un de l'autre et la seconde angulairement l'un par rapport à l'autre.

Dans de nombreux domaines, par exemple le mobilier, il est courant d'assembler deux panneaux dans une position angulaire, le plus souvent orthogonale, entre eux, et il est connu d'employer des moyens de liaison permettant un raccordement non pas à angles vifs mais suivant un arc de cercle.

Pour diminuer les frais de stockage et de transport des meubles, il est par ailleurs connu de les agencer de manière telle qu'ils puissent être présentés à plat et que l'utilisateur n'ait à réaliser qu'une opération facile et rapide de montage, généralement par repliage des panneaux sur eux-mêmes ou plus exactement par rabattement des panneaux angulairement les uns par rapport aux autres. Pour ce faire, il est fait usage de charnières qui sont parfois réalisées en matière plastique, mais dont l'agencement est tel qu'elles ne permettent de réaliser entre les panneaux qu'une liaison angulaire inesthétique.

L'invention apporte une solution à ce problème de la liaison de deux panneaux qui doivent pouvoir être, soit placés dans le prolongement l'un de l'autre, soit raccordés l'un à l'autre part une zone courbe en forme de portion de cylindre.

L'invention a pour objet à cet effet un moyen de liaison constitué par un film de matière plastique qui, prolongeant par sa face extérieure celle des deux panneaux à lier et venant de moulage avec les chants de ces panneaux, comporte sur sa face inférieure comprise entre ces chants une pluralité de rainures longitudinales parallèles dont les dimensions sont telles que le volume de matière plastique décroît depuis les chants jusqu'à la zone longitudinale médiane.

Cette diminution du volume du film de matière plastique constituant à la fois la liaison et la charnière entre les deux panneaux peut être obtenue :

- soit en donnant une largeur progressive aux rainures longitudinales du film depuis ses bords latéraux jusqu'à sa zone centrale ;

- soit en donnant une profondeur progressive aux rainures, c'est-à-

2

dire une épaisseur dégressive au film depuis ses bords latéraux jusqu'à sa zone centrale.

Dans les deux cas, cette diminution du volume de matière permet, lors du montage du meuble ou au produit dont les deux panneaux sont des éléments constitutifs, d'obtenir entre ces deux panneaux une zone de liaison présentant une courbure régulière, donc esthétique.

Pour garantir la formation de cette courbure, pour la maintenir de façon permanente, et pour limiter l'angle formé par les deux panneaux en position d'utilisation, des moyens complémentaires peuvent être associés à cet agencement de film-charnière.

Suivant une forme d'exécution, les chants transversaux des deux panneaux présentent en direction l'un de l'autre deux prolongements qui, venant de moulage avec eux et avec le film, sont situés au-dessus de la face intérieure de ce film, présentent en regard de ce film un bord courbe, viennent en appui l'un contre l'autre lorsque les deux panneaux ont été amenés dans la position angulaire recherchée, et servent par leur bord courbe d'appui au film de liaison des deux panneaux lorsqu'ils occupent cette position angulaire.

L'ensemble chants et moyen de liaison étant réalisé en matière plastique et venant de moulage en une seule opération, cette matière plastique peut en outre être mise à profit pour permettre la réalisation de moyens permettant de maintenir les deux panneaux dans la position angulaire qu'ils doivent occuper en période normale d'utilisation. C'est ainsi que des chapes peuvent être aménagées sur l'un des panneaux et des doigts sur l'autre panneau, des moyens automatiques de clipsage ou d'accrochage étant prévus entre ces chapes et ces doigts.

L'invention sera bien comprise d'ailleurs à l'aide de la description qui suit en référence au dessin schématique annexé représentant à titre d'exemple non limitatif une forme d'exécution de ce moyen de liaison entre deux panneaux :

Figures 1 et 2 en sont des vues en perspective du côté intérieur, respectivement lorsque les deux panneaux sont à plat dans le prolongement l'un de l'autre c'est-à-dire en position de stockage et de transport et lorsqu'ils sont repliés angulairement l'un par rapport à l'autre dans leur position normale d'utilisation ;

Figure 3 est une vue en perspective correspondant à la figure

3

2, les deux panneaux et leur moyen de liaison étant vus du côté extérieur ;

Figures 4 et 5 sont, à plus grande échelle, des vues en coupe transversale suivant 4/4 de figure 1 dans le cas de deux variantes d'exécution du film-charnière réalisant la liaison entre les deux panneaux.

Dans ce dessin, (1) et (2) désignent deux panneaux constitués en un matériau quelconque, par exemple en un matériau aggloméré à base de copeaux de bois ou de fibres de bois. Ces deux panneaux sont destinés à constituer par exemple deux faces adjacentes d'un meuble ; et ils doivent, en position normale de réalisation de ce meuble, occuper une position perpendiculaire l'un par rapport à l'autre. Comme cela est connu en soi,chacun de ces deux panneaux comporte un chant périphérique respectivement (3) pour celui (1) et (4) pour celui (2).

Ces chants sont réalisés en matière plastique et sont moulés par injection à la périphérie des panneaux.

Les chants (3 et 4) des deux panneaux (1 et 2) viennent en réalité de moulage en une seule pièce avec un film central (5) qui les relie.

Ce film présente d'un côté une face rigoureusement lisse. Il s'agit de sa face extérieure (5a) qui prolonge de façon rigoureuse les faces extérieures des panneaux (1 et 2) et leurs chants (3 et 4).

Du côté opposé, c'est-à-dire du côté intérieur, ce film présente une face (5b) comportant une pluralité de rainures longitudinales (6) parallèles les unes aux autres.

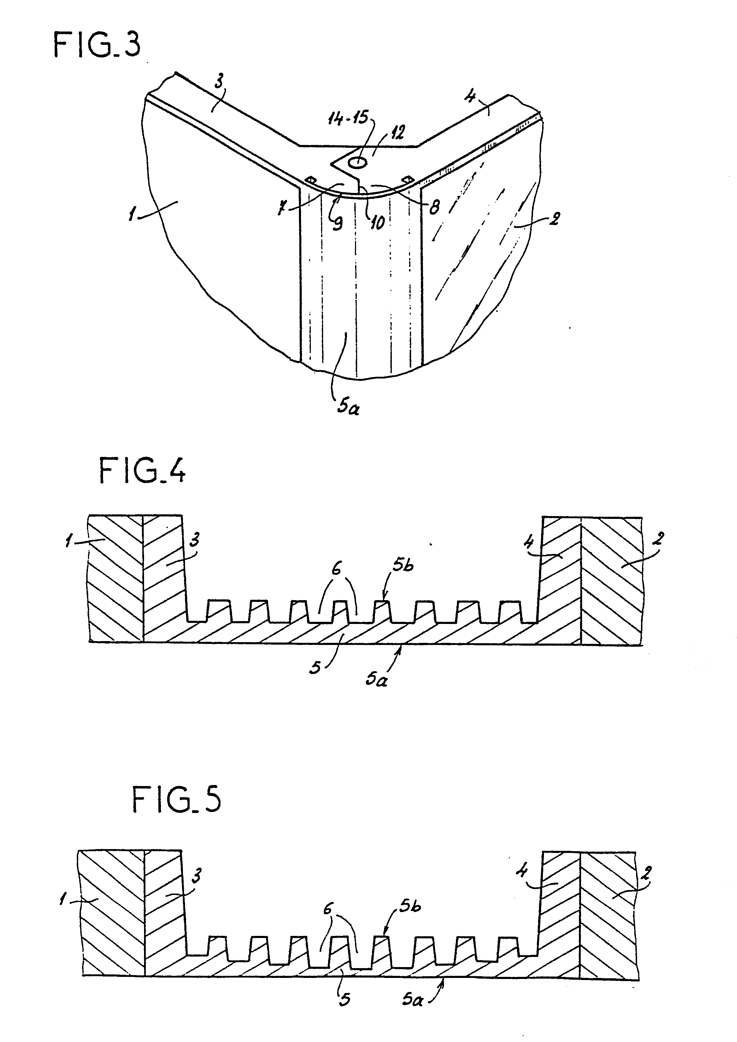

Dans le cas représenté à la figure 4, ces rainures (6) ont une largeur progressive depuis celles situées au ras des chants (3 et 4) jusqu'à celle médiane. Dans le cas représenté à la figure 5, c'est la profondeur des rainures (6) et non pas leur largeur qui est dégressive ; dans ce cas, l'épaisseur du film (5) est donc dégressive depuis ses bords longitudinaux jusqu'à sa zone centrale.

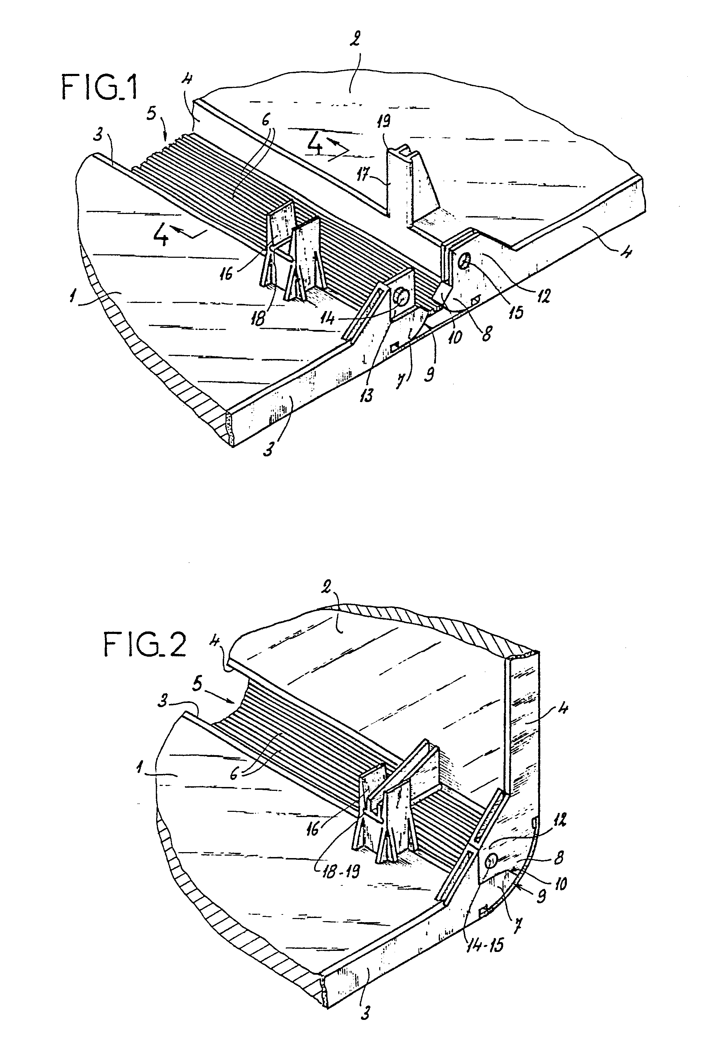

La progressivité de la largeur ou de la profondeur des rainures (6) conduit à une dégressivité de l'épaisseur du film de matière plastique (5) à partir de sa zone de liaison avec les panneaux (1 et 2) jusqu'à sa zone centrale. Grâce à cette dégressivité d'épaisseur et à la présence des rainures (6), le film (5) se comporte à la manière d'une charnière et permet lors du repliage des panneaux (1 et 2) l'un par rapport à l'autre, c'est-à-dire lorsque ces deux panneaux sont amenés de la position à plat montrée à la figure 1 à la position angulaire montrée à la figure

4

2, d'obtenir une courbure parfaite dans la zone de liaison entre les deux panneaux. Le film (5) reliant les deux panneaux (1 et 2) donne lieu, entre ces deux panneaux, à la formation d'une portion de cylindre comme le montrent les figures 2 et 3.

Pour que l'angle ainsi réalisé entre les deux panneaux (1 et 2) ne soit pas sujet à déformation et soit résistant mécaniquement, les chants transversaux (3 et 4) des deux panneaux (1 et 2) présentent avantageusement des prolongements (7 et 8) situés en direction l'un de l'autre. Ces prolongements comportent chacun un bord courbe (9) situé au-dessus du film (5) et un bord terminal oblique (10).

Lorsque les deux panneaux (1 et 2) ont été amenés dans leur position angulaire d'utilisation, les bords courbes (9) des deux prolongements (7 et 8) se prolongent l'un l'autre en formant un arc de cercle sur lequel prend appui directement le film (5). Ce film, qui joue le rôle de charnière et d'élément de liaison entre les deux panneaux (1 et 2), se trouve donc soutenu. En outre, les bords obliques terminaux (10) des deux prolongements (7 et 8) viennent en appui l'un contre l'autre ; ils délimitent ainsi l'angle minimal devant être formé entre les deux panneaux (1 et 2).

Cet angle minimal est celui recherché lorsque les deux panneaux (1 et 2) ont été amenés dans leur position d'utilisation, c'est-à-dire celle des figures 2 et 3. Pour que les panneaux demeurent dans cette position, des moyens complémentaires sont prévus. Il s'agit par exemple d'une chape (12) aménagée dans le prolongement des chants (4) du panneau (2) au-dessus du prolongement (8). Cette chape coopère avec un tenon (13) aménagé dans le prolongement des chants (3) du panneau (1) au-dessus du prolongement (7). Ce tenon (13) comporte un doigt (14) s'enclenchant élastiquement dans un orifice (15) de la chape (12) lors de la pénétration du tenon (13) dans cette chape, c'est-à-dire lorsque les panneaux (1 et 2) ont été amenés dans leur position d'utilisation.

Pour permettre un bon verrouillage de ces deux panneaux l'un par rapport à l'autre, il peut aussi être fait usage d'une chape (16) venant de moulage avec le chant longitudinal (3) du panneau (1) et coopérant avec un tenon (17) venant de moulage avec le chant longitudinal (4) du panneau (2). Des moyens de clipsage complémentaires (18 et 19) prévus sur la chape (16) et sur le tenon (17) permettent d'assurer le

5

maintien de l'un dans l'autre lorsque les deux panneaux (1 et 2) ont été amenés dans leur position normale d'utilisation.

Comme il va de soi, l'invention ne se limite pas à la seule forme d'exécution de ce moyen de liaison par film-charnière entre deux panneaux adjacents qui a été ci-dessus indiquée à titre d'exemple ; elle en embrasse au contraire toutes les variantes de réalisation.

6

## REVENDICATIONS

1. - Moyen de liaison entre deux panneaux adjacents, notamment entre deux panneaux d'un meuble, constitué par un film de matière plastique prolongeant par sa face extérieure celle des deux panneaux à lier et venant de moulage avec les chants de ces panneaux, caractérisé en ce que ce film (5) comporte sur sa face intérieure (5b) comprise entre les chants (3, 4) des panneaux (1, 2) une pluralité de rainures longitudinales parallèles (6) dont les dimensions sont telles que le volume de matière plastique décroît depuis les chants jusqu'à la zone longitudinale médiane.

2. - Moyen de liaison entre deux panneaux adjacents selon la revendication 1, caractérisé en ce que les rainures (6) du film-charnière (5) ont une largeur progressive depuis les zones de liaison du film avec les chants (3, 4) des panneaux (1, 2) en direction de la zone longitudinale centrale du film.

3. - Moyen de liaison entre deux panneaux adjacents selon la revendication 1, caractérisé en ce que les rainures (6) du film-charnière (5) ont une profondeur progressive depuis les zones de liaison du film avec les chants (3, 4) des panneaux (1, 2) en direction de la zone longitudinale centrale du film.

4. - Moyen de liaison entre deux panneaux adjacents selon l'une quelconque des revendications 1 à 3, caractérisé en ce que les chants transversaux (3, 4) des deux panneaux (1, 2) présentent en direction l'un de l'autre deux prolongements (7, 8) qui, venant de moulage avec les chants et avec le film (5), sont situés au-dessus de la face intérieure (5b) du film (5), présentent en regard de ce film un bord courbe (9), viennent en appui l'un contre l'autre lorsque les deux panneaux (1, 2) ont été amenés dans la position angulaire recherchée, et servent par leur bord courbe (9) d'appui au film de liaison (5) des deux panneaux (1, 2) lorsqu'ils occupent cette position angulaire.

5. - Moyen de liaison entre deux panneaux adjacents selon l'une quelconque des revendications 1 à 4, caractérisé en ce qu'une chape (12) vient de moulage avec le chant transversal (4) du panneau (2) dans le prolongement de ce chant et coopère avec un tenon (13) venant de moulage avec le chant transversal (3) du panneau (1) dans le prolongement de ce chant, un doigt (14) solidaire de ce tenon (13) coopérant avec

7

un orifice (15) de la chape (12) lorsque ce tenon (13) pénètre dans cette chape (12).

6. - Moyen de liaison entre deux panneaux adjacents selon l'une quelconque des revendications 1 à 5, caractérisé en ce qu'une chape (16) vient de moulage avec le chant longitudinal (3) du panneau (1) et coopère avec un tenon (17) venant de moulage avec le chant longitudinal (4) du panneau (2), des moyens de clipsage complémentaires (18, 19) étant prévus respectivement dans la chape (16) et sur le tenon (17).

FIG.1

FIG.2

## FIG.3

## FIG.4

## FIG.5

9420

Office européen
des brevets

**RAPPORT DE RECHERCHE EUROPEENNE**

EP 83 42 0186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 120 989 (LICENTIA) <br> * Revendication 6; figure 3 * <br><br> --- | 1,3 | F 16 B 12/04 <br> A 47 B 96/20 |
| Y | DE-A-2 815 714 (BZ-PLANKENHORN) <br> * Revendications 1,2,10,11; figures 1-3,6,8,9 * <br><br> --- | 1,3 | |
| A | FR-A-2 273 183 (DUPREE) <br> * Page 8, lignes 6-39; figures 2,3 * <br><br> --- | 5,6 | |
| A | EP-A-0 062 013 (CORNA) <br> * Revendications 1,2; figures 1,3 * <br><br> ----- | 4-6 | |

DOMAINES TECHNIQUES
RECHERCHES (Int. Cl. ³)

A 47 B
F 16 B
B 27 G
B 65 D

Le présent rapport de recherche a été établi pour toutes les revendications

| Lieu de la recherche <br> LA HAYE | Date d'achèvement de la recherche <br> 03-04-1984 | Examinateur <br> SCHMITTER BERNARD |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82